# EUROPEAN PATENT APPLICATION

(11) **EP 2 219 108 A1**
(43) Date of publication of application: **18.08.2010**
(21) Application number: 10152646.5
(22) Date of filing: 04.02.2010
(51) Int. Cl.: G06F 9/40

(54) **System and method for executing a complex task by sub-tasks**

(30) Priority: 12.02.2009 US 369853
(71) Applicant: Ceva D.S.P. Ltd., Herzlia Pituach 46120 (IL)
(72) Inventor: Panzer, Adi, 67451, Tel Aviv (IL)
(74) Representative: Graf, Werner

(57) **Abstract**

A system, device and method for performing a task by sub-tasks are provided. A number of sub-tasks may be selected for execution and an execution order may be determined. A prologue for a preceding sub-task and an epilogue for a subsequent task may be executed. The same prologue and epilogue may be used for a number of sub-tasks pairs. Executing the prologue and epilogue may enable consecutive execution of sub-tasks. Other embodiments are described and claimed.

## Description

### BACKGROUND OF THE INVENTION

Designers of computing devices with limited resources, e.g., mobile phones, personal digital assistances (PDA) or other devices, are constantly faced with contradictory challenges. On one hand, there is a constant demand for new features and better performance, and on the other hand there is a demand for reduced size and price. Such challenges may be met by reducing memory requirements of such devices and an increase of processor or controller efficiency.

Some implementations increase processor efficiency by dividing complex tasks into a number of sub-tasks and creating a number of functions from these subtasks. For example, a main task may be divided to sub-task A, sub-task B and sub-task C. Two functions may be defined such that function X comprises an execution sequence that is: sub-task A->sub-task C and->sub-task B while function Y may be the execution sequence sub-task C->sub-task A and->sub-task B. Functions X and Y may be executed according to real time context, conditions, input parameters, flow or other circumstances. Such a solution may be efficient in terms of processor cycles since only the necessary code is executed and the number of calls to sub-tasks is low. However, such a solution is inefficient in terms of memory consumption since code size may be large as sub-task code or instructions is duplicated. For example, in the example above, the code of sub-tasks A, B and C is duplicated in functions X and Y.

Other implementations analyze input parameters, context, conditions, or other circumstances and select the sub-tasks to be executed. Such a solution may be efficient in terms of memory consumption as a single copy of each sub-task needs to be kept in memory. However, such solution may be inefficient in terms of processor cycles since calling sub-tasks and returning to the calling function may require extra processor cycles.

### SUMMARY OF EMBODIMENTS OF THE INVENTION

Embodiments of the invention may select a number of sub-tasks to perform a complex task. Sub-tasks may comply with a predefined interface or execution scheme. A current sub-task may execute a predefined executable code segment including a predefined epilogue and a predefined prologue. A number of sub-tasks may be scheduled to execute and transfer control of a controller from a first sub-task to a second sub-task according to an order that may be determined at run time.

### BRIEF DESCRIPTION OF THE DRAWINGS

Embodiments of the invention are illustrated by way of example and not limitation in the figures of the accompanying drawings, in which like reference numerals indicate corresponding, analogous or similar elements, and in which:

**Fig. 1** shows a logical block diagram of a computing device according to embodiments of the invention;

**Figs. 2A** and **2B** show implementations of sub-tasks execution according to prior art;

**Fig. 2C** shows an exemplary sub-task execution according b embodiments of the invention;

**Figs. 3A, 3B****,** **3C, 3D** and **3E** show exemplary sub-task execution according to embodiments of the invention; and

**Fig. 4** shows an exemplary flowchart according to embodiments of the invention.

It will be appreciated that for simplicity and clarity of illustration, elements shown in the figures have not necessarily been drawn to scale. For example, the dimensions of some of the elements may be exaggerated relative to other elements for clarity.

### DETAILED DESCRIPTION OF EMBODIMENTS OF THE INVENTION

In the following detailed description, numerous specific details are set forth in order to provide a thorough understanding of the invention. However, it will be understood by those of ordinary skill in the art that the invention may be practiced without these specific details. In other instances, well-known methods, procedures, components, modules, units and/or circuits have not been described in detail so as not to obscure the invention.

Although embodiments of the invention are not limited in this regard, discussions utilizing terms such as, for example, "processing," "computing," "calculating," "determining," "establishing", "analyzing", "checking", or the like, may refer to operation(s) and/or process(es) of a computer, a computing platform, a computing system, or other electronic computing device, that manipulate and/or transform data represented as physical (e.g., electronic) quantities within the computer's registers and/or memories into other data similarly represented as physical quantities within the computer's registers and/or memories or other information storage medium that may store instructions to perform operations and/or processes.

Although embodiments of the invention are not limited in this regard, the terms "plurality" and "a plurality" as used herein may include, for example, "multiple" or "two or more". The terms "plurality" or "a plurality" may be used throughout the specification to describe two or more components, devices, elements, units, parameters, or the like. For example, "a plurality of stations" may include two or more stations.

Unless explicitly stated, the method embodiments described herein are not constrained to a particular order or sequence. Additionally, some of the described method embodiments or elements thereof can occur or be performed at the same point in time or overlapping points in time. As known in the art, an execution of an executable code segment such as a function, task, sub-task or program may be referred to as execution of the function, program or other component. Executing or execution of sub-tasks, functions or executable code as used hereinafter is to be understood or construed as an execution of sub-tasks, functions or executable code by a controller, central processing unit (CPU) or any other applicable computing elements or components as known in the art. Accordingly, a phrase such as "execution of sub-task X" should be understood to mean for example "an execution of sub-task X by a controller or processor" and a phrase such as "calling function Y executes" should be construed as for example "execution of calling function Y by a controller or processor".

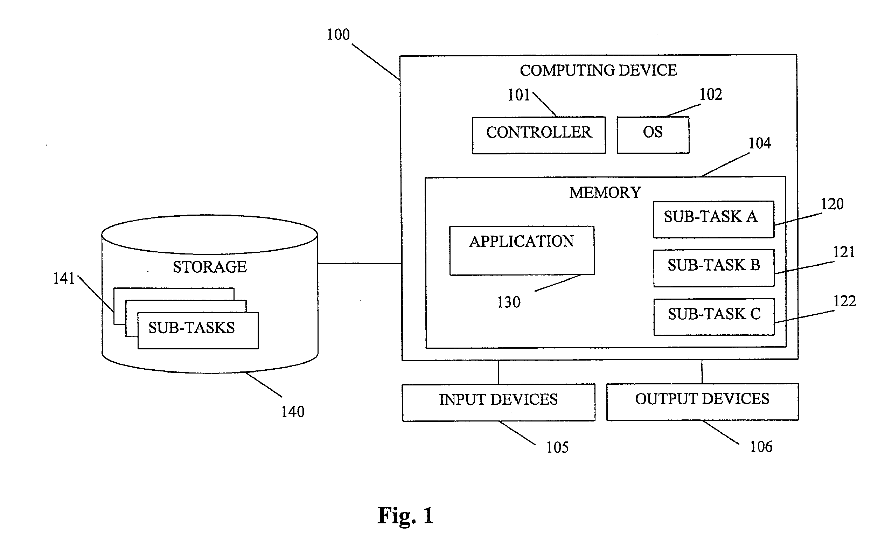

Reference is made to Fig. 1 showing a computing device 100. According to embodiments of the invention, computing device 100 may include a memory 104, central processing unit (CPU) or controller 101, storage device 140, an operating system (OS) 102, input device(s) 105 and output device(s) 106. According to embodiments of the invention, storage device 140 may be any suitable storage device, e.g., a hard disk, flash memory device or a universal serial bus (USB) device. Input devices 105 may include a mouse, a keyboard, a touch screen or any suitable input devices and output devices 106 may include one or more displays, speakers and/or any other suitable output devices. Input devices 105 and/or output devices 106 may include any applicable input/output (I/O) devices such as a network interface card (NIC), wireless communication sub-systems or any other I/O devices.

According to embodiments of the invention, an exemplary application 130 may be loaded into memory 104, for example, from storage 140 and may be executed by controller 101 operating in accordance with operating system 102. For example, application 130 may be any software tool, program or application typically executed by a controller in a mobile phone, PDA or other computing device. Application 130 may be loaded into memory 104 from storage device 140, from any other storage, or over a wired or wireless network. Other objects may be loaded into memory 204 and used by applications such as application 130. Sub-tasks A, B and C may also be loaded into memory 104, for example, from storage device 140, by controller 101. Alternatively or additionally, memory 104 may be a nonvolatile memory capable of storing application 130 and sub-tasks A-C even when computing device 100 is turned off. Storage 140 may store additional objects such as sub-tasks 141 or additional applications, programs or digital structures or objects (not shown) that may be loaded into memory 104 and executed or used by controller 104, applications or programs running on computing device 100.

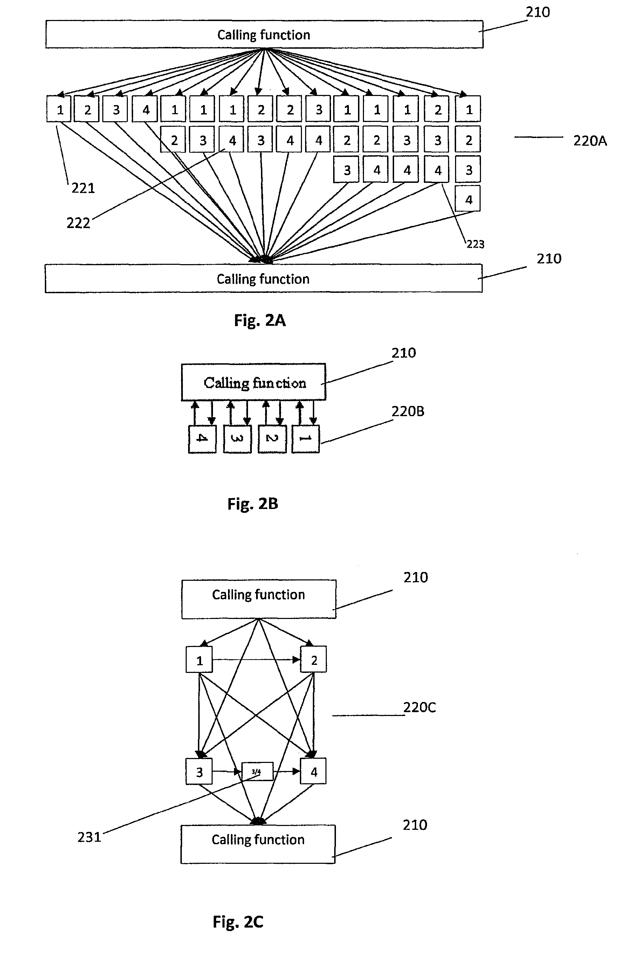

Reference is made to Fig. 2A and Fig. 2B showing implementations according to prior art and Fig. 2C showing an exemplary implementation according to embodiments of the present invention. Sub-tasks 1, 2, 3 and 4 may be used by calling function 210 in order to execute a task by a controller. As shown by the fifteen columns 220A in Fig. 2A, fifteen (15) different combinations may be prepared, in advance, from the four subtasks 1, 2, 3 and 4. Such fifteen (15) different combinations may be stored in memory, e.g. memory 104 of device 100 and the appropriate combination may be called by calling function 210 according to context, circumstances or need. For example, in a first situation, only sub-task 1 may be executed by a controller as shown by 221. In a second situation or scenario the combination of sub-task 1 and sub-task 4 may be required and accordingly executed by a controller as shown by 222 and a third situation may require the execution by a controller of sub-tasks 1, 3 and 4 as shown by 223. According to this implementation, several or all possible combinations of the four sub-tasks are stored, in advance, in a memory and the appropriate combination is called by a calling function as required. However, storing all combinations as shown by 220A may prove to be inefficient in terms of memory consumption.

As shown by Fig. 2B, another implementation may comprise specifically calling of sub-tasks 1, 2, 3 and 4 shown by 220B by calling function 210. According to such implementation, calling function 210 may call any one of sub-tasks 220B any number of times in any order required. Such an implementation may require less memory than the implementation described with reference to Fig. 2A. However, as known in the art, calling a sub-task and returning execution and/or control from the called sub-task (e.g., sub-task 1) to the calling function (e.g., calling function 210) may require extra processing cycles of the controller executing the sub-task and calling function. Such extra processing cycles may be required for, e.g., restoring pointers, stacks and/or registers, handling memory allocations etc.

An exemplary implementation according to embodiments of the invention as shown by Fig. 2C may exhibit low memory consumption since only one copy of each sub-task may be loaded into memory and high execution efficiency due to reduced processing cycles, since a number of sub-tasks may be executed by a controller without returning to the calling function or otherwise requiring involvement of the calling function According to embodiments of the present invention, calling function 210 may call any one of sub-tasks 220C. The called sub-task may call another sub-task, any number of sub-tasks may be chained in such way and the last sub-task may call, execute or otherwise return control and/or execution to the calling function. For example, as shown in Fig. 2C, calling function 210 may call sub-task 1, sub-task 1 may call subtask 3 that may subsequently call subtask 2 and sub-task 2 may call the calling function thus completing an execution of a sequence of sub-tasks. Accordingly, the sub-tasks may be executed consecutively by a controller. As shown by 231, in some cases, a small, possibly predefined and pre-complied, switching code may be required in order to transfer execution from one sub-task to another, e.g., from sub-task 3 to sub-task 4 as shown. Further details regarding the switching code and other aspects are described hereinbelow. According to embodiments of the invention, as shown by Fig. 2C and unlike the implementation shown by Fig. 2A, only one copy of each sub-task may be loaded into, or stored in, memory. Accordingly, memory requirement may be dramatically reduced. Additionally, as opposed to the implementation shown by Fig. 2B, an execution flow according to one embodiment of the invention does not include returning to the calling function upon termination of execution (e.g., by a controller) of each sub-task. Rather, sub-tasks may be executed sequentially and/or consecutively, one after the other without "returning" to, or otherwise involving the calling function. It will be noted that in some embodiments of the invention, more than one sub-task may be executed at the same time. For example, a calling function may set parameters, environment or manipulate code, for example, of sub-tasks such that a number of sub-tasks may be executed (by a controller) without involvement of the calling function as described herein and further, some of the sub-tasks may be executed (by a controller) simultaneously, at the same time. By eliminating the need to "return" to the calling function (as described in further details herein) when a first sub-task completes execution and before a second sub-task commences execution the number of cycles of the controller or CPU executing the calling function and sub-tasks may be reduced linearly with the number of sub-tasks executed.

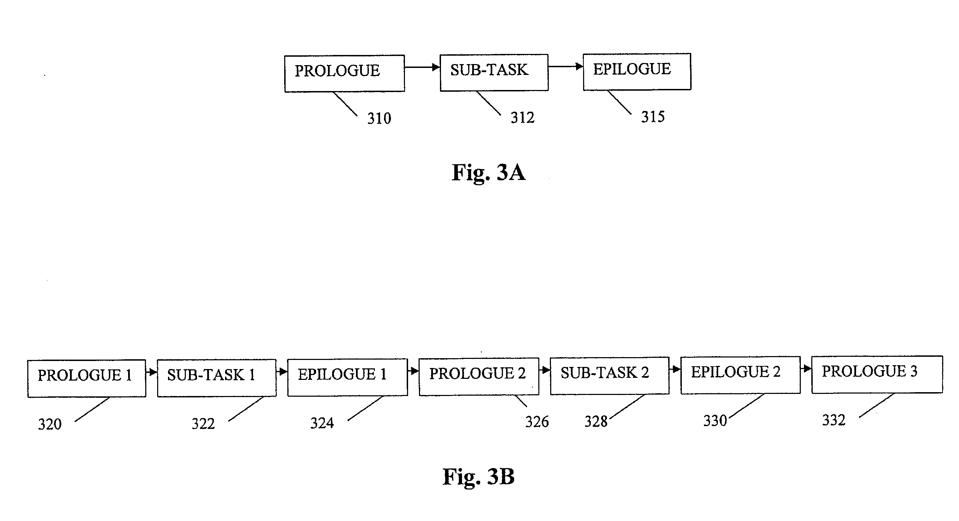

Reference is made to Fig. 3A showing an execution sequence related to a sub-task according to embodiments of the invention. As shown, an execution (by a controller) of sub-task 312 may include executing a prologue 310 prior to executing the actual sub-task 312 and executing an epilogue 315 (by the controller) upon completion of the execution of sub-task 312. As known in the art, a prologue such as prologue 310 may comprise any functions or tasks that may be required to be performed before the sub-task may execute, e.g., allocating memory, setting pointers, setting controller registers, initializing variables in, and/or loading data to memory, controller registers or any other applicable components. As known in the art, an epilogue such as epilogue 315 may comprise any functions or tasks that may be required upon completion of an execution of a sub-task, e.g., cleaning of memory, restoring controller registers, setting or resetting pointers, setting or resetting controller registers, initializing or restoring variables in, and/or loading data to memory, controller registers or any other applicable components.

According to embodiments of the invention, a prologue and/or epilogue may be an executable code segment. Such executable code may be written and compiled by a programmer and may be associated in various ways with sub-tasks. For example, epilogue and/or prologue executable code may be attached to the executable code of each sub-task thus effectively becoming part of the sub-task's executable code. Alternatively, a single copy of prologue and/or epilogue executable code may be stored in memory and may further be called by sub-tasks when required. For example, a calling function may load prologue and/or epilogue executable code into memory and provide sub-tasks with a pointer to such executable codes. Alternatively, the calling function may manipulate the executable (e.g., assembly) code of sub-tasks thus cause them to execute a prologue and/or epilogue executable code previously stored in memory. Such manipulation of sub-tasks code may include inserting instructions such as "jump", "branch" or any other suitable instruction needed in order to cause a sub-task to execute a prologue or epilogue executable code. In some embodiments, sub-tasks may be designed and implemented such that the same prologue and/or epilogue may be suitable for some or even all sub-tasks. Accordingly, a single copy of epilogue and/or prologue executable code may be loaded into memory and used by any number of sub-tasks.

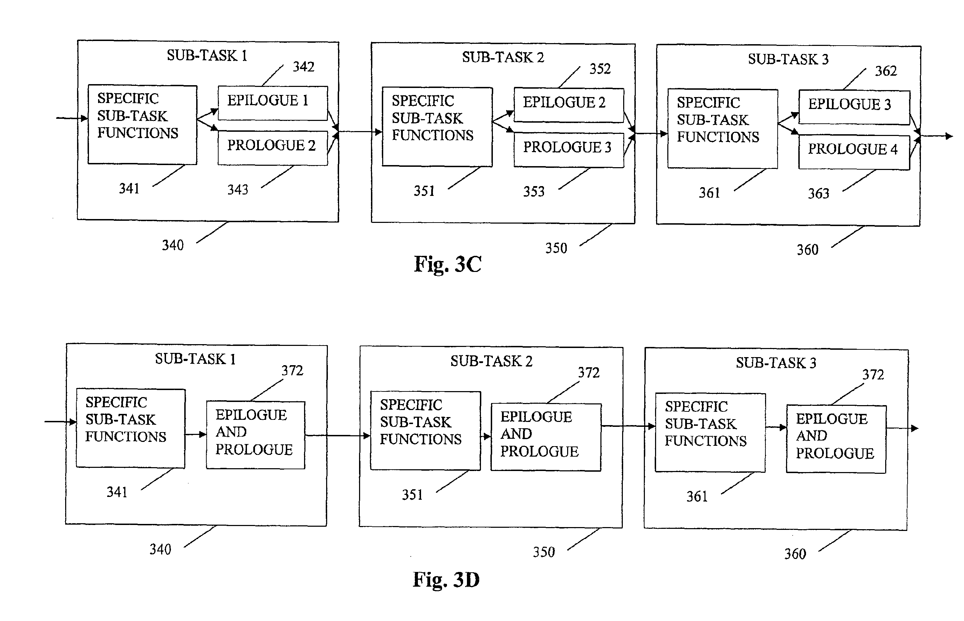

Reference is made to Fig. 3B showing an execution sequence related to an execution of a number of sub-tasks according to embodiments of the invention. The execution by a processor of prologue-1 shown by block 320 may be initiated by a calling function or any other entity calling sub-task-1 or otherwise causing sub-task to execute. Subsequently, sub-task shown by block 322 may be executed. As shown by block 324, epilogue-1 may be executed, for example, by sub-task upon completion of execution of the specific functions of sub-task-1. Next, as shown by block 326, prologue-2, preparing execution of sub-task-2 may be executed, for example by sub-task-1, followed by execution of sub-task-2 as shown by block 328. Similarly, epilogue-2 shown by block 330 and prologue-3 shown by block 332 may be executed by sub-task-2 prior to an execution of sub-task-3 (not shown). Although only a number of exemplary sub-tasks are shown, according to embodiments of the invention, any number of tasks or sub-tasks may be executed according to a flow as described herein and shown in Fig. 3B, 3C and 3D. It will be noted that an execution of a number of sub-tasks as described herein may be performed with limited or no involvement of the calling function.

Reference is made to Fig. 3C showing an execution sequence related to an execution of a number of sub-tasks according to embodiments of the invention. Fig. 3C shows a distribution of execution of prologues, epilogues and specific sub-tasks functions among a number of sub-tasks. Blocks 340, 350 and 360 may conceptually represent execution of three exemplary sub-tasks according to embodiments of the invention. Although other functions or tasks may be performed by described sub-tasks, only exemplary and relevant functions such as specific sub-task's functions, epilogues and prologues are described and shown.

As shown by block 341, sub-task-1 may execute specific functions of sub-task-1. Sub-task-1 may further execute epilogue-1 as shown by block 342 and prologue-2 shown by block 343 where prologue-2 may comprise any preparations required prior to an execution of sub-task-2 shown by block 350 and epilogue-1 may comprise any tasks required to be executed after sub-task-1 has finishes executing. Similarly, sub-task-2 shown by block 350 may execute its specific functions as shown by block 351, its epilogue, as shown by epilogue-2 in block 352 and prologue-3 shown by block 353, where prologue-3 may prepare or setup the environment, context and/or other parameters for an execution of sub-task-3 shown by block 360 and epilogue-2 may comprise any functions, operations or process required upon completion of execution of sub-task-2. Similarly, sub-task-3 shown by block 360 may comprise execution of specific sub-task functions (361), epilogue-3 (362) and prologue-4 (363).

Although not shown, any number of sub-tasks may follow sub-task-3 shown by block 360 in a way similar to the way sub-task-3 follows sub-task-2, for example, an execution of a sub-task-4 (not shown) may follow the execution of sub-task-3, accordingly, prologue-4 may be executed by sub-task-3. Alternatively, execution and/or control of a processor or controller may return from sub-task-3 to the calling function or calling entity that called or initiated sub-task-1.

According to embodiments of the invention, execution of an epilogue or other functions may be performed in parallel with an execution of a prologue. For example, sub-task-2 in Fig 3C may simultaneously execute epilogue-2 352 and prologue-3 353. As known in the art, a controller or processor may execute a number of operations in a single cycle. Accordingly, a controller, e.g., controller 101 in Fig. 1 may execute epilogue-2 (352) and prologue-3 (353) simultaneously, or their execution may overlap. Such parallel, simultaneous or partially simultaneous execution is emphasized by having epilogue-2 and prologue-3 or epilogue-3 and prologue-4 shown in parallel along an imaginary time line going from left to right along Fig. 3C.

According to embodiments of the invention, a number of different sub-tasks may be designed and implemented such that they share a common or standard scheme, protocol or interface. In such cases, the same module or executable code executing a prologue of the current sub-task and an epilogue for the next or subsequent sub-task may be used to chain, or link an execution of a number of sub-tasks since the same prologue and epilogue may be suitable for a number of sub-tasks pair.

For example, a number of sub-tasks may be designed and implemented such that they share a common prologue and a common epilogue. Accordingly, a first sub-task may execute its specific functions, then execute a common module or a common executable code section, where such common or predefined executable code may execute the common epilogue and a common prologue code. Following an execution of the common epilogue and prologue, a second sub-task may execute, for example, the first task may transfer execution to the second task by having its "return" address properly modified, e.g., instead of "return"ing to the calling function, a sub-task may "return" to another sub-task Any number of sub-tasks may be thus chained by a common epilogue/prologue pair executed by a common executable section. Such chained, linked or otherwise associated for execution sub-tasks may execute in a predefined order, e.g., one after the other, some serially and some in parallel or simultaneously without the calling function having to supervise, manage or be otherwise involved in the execution flow.

Execution of the epilogue and/or prologue may be performed by, or in the context of, the first sub-task in the example above or the second sub-task in the example above. For example, a calling function that causes the first and second sub-tasks in the example above to execute may manipulate the executable code of the first, second or both sub-tasks in the example above such that, for example, upon completing executing its specific tasks, the first sub-task proceeds to execute the predefined code section comprising the epilogue and prologue and further causes the second sub-tasks to execute after the epilogue and prologue have been executed.

Embodiments of the invention may be applicable to any signal processing fields, e.g., analysis, interpretation, and manipulation of signals pertaining to sound, image, biological fields (e.g., electrocardiograms), radar technology. Embodiments of the invention may be utilized in aspects such as filtering (e.g., noise separation), storing, compressing and/or reconstruction of such exemplary signals. The methods described herein may be implemented on any applicable or suitable computing device, such as, but not limited to, a controller, a chip, an application specific integrated circuit (ASIC), a field programmable gate array (FPGA) or a central processing unit (CPU) in a computer.

An exemplary implementation may be in the field of signal processing. For example, image or video processing, e.g., video deblocking as known in the art. As known in the art, video deblocking may be used to remove block-like artifacts from low-quality and/or highly compressed videos. Deblocking may greatly increases overall video quality. Deblocking may comprise filtering edges between two adjacent blocks. Several types of filters may be used for each edge. For example, according to the real video 9 codec, the top and left edges may be filtered by one of "strong", "normal" or "weak" filter functions and the bottom edge may be filtered by one of "normal" or "weak" filter functions. Accordingly 3*3*2 = 18 combinations of filter functions execution sequences may be selected for each block. In addition, a filter may be executed more than once, e.g., one or more filter functions may be executed more than once in order to improve output quality, thus the number of possible combinations mentioned above may actually be higher.

According to embodiments of the invention, the discrete filter functions may be coded once and stored as sub tasks. A calling function may determine the sequence of filter functions (sub tasks) required, may further set required parameters, e.g., provide pointers, manipulate "return" addresses etc. and cause a sequence of filter functions to execute, one after the other, possibly without further intervention of the calling function. Such execution may be far superior to an execution of one filter function after another by the calling function as known in prior art, whereby the calling function has to specifically "call" each required filter function which "returns" to the calling function upon termination of execution.

Another embodiment of the present invention may be in the field of video processing, e.g., compression and intra-prediction. Intra-prediction is a technique whereby content or relevant information of a video block may be predicted using neighboring pixels or blocks in the same picture. Intra prediction process in a video decoder may comprise a number of prediction modes where a number of different interpolation modes may be used for each prediction mode. Furthermore, each video block may require a different prediction mode.

According to embodiments of the invention, each interpolation mode may be implemented as a sub task. Accordingly, the calling function may select the interpolation modes (and the associated sub tasks) required or desired, determine the required execution sequence of the sub tasks, setup any required parameters and call the first sub task, which will, upon terminating its execution, call the next sub task and so on, according to the method described herein.

According to embodiments of the invention, a number of sub-tasks may have or share a common or same prologue and/or epilogue. In such cases, the same code for an epilogue and/or prologue may be executed by all such subtasks. Reference is made to Fig. 3D showing an execution sequence related to an execution of a number of sub-tasks according to embodiments of the invention. As shown, when sub-task-1 shown by block 340 finishes execution of its specific functions 341 it may execute an epilogue and a prologue as shown by block 372. Block 372 represents a module that executes both an epilogue of the sub-task completing its execution and a prologue of the subsequent sub-task Such execution may be paralleled, namely, an epilogue and prologue may be executed simultaneously or in the same time. According to embodiments of the invention and as shown by block 372 in sub-task-1, sub-task-2 and sub-task-3, the same code represented by block 372 may be executed by any number of sub-tasks in order to transfer execution from one sub-task to another. Using the same module to perform an epilogue for the current sub-task and a prologue for the next or subsequent (an epilogue/prologue module) may be made possible by designing and implementing a number of sub-tasks according to a predefined interface, scheme or protocol.

Accordingly when sub-task-2 (shown by block 350), that may run subsequently to sub-task-1, finishes executing its specific functions it may execute a similar, same or identical epilogue and prologue code as shown by block 372. It will be recognized that any number of sub-tasks may be thus chained, namely, any number of subtasks may execute in sequence, e.g., serially, and the same code (e.g., as shown by block 372) performing an epilogue for the previous task and a prologue for the next task may be executed between execution of the sub-tasks. As described herein, execution of an epilogue or other functions may be performed in parallel with an execution of a prologue. Accordingly, execution of epilogue and prologue in block 372 may be done in parallel, e.g., the code of the epilogue and prologue in block 372 may be executed simultaneously as described herein.

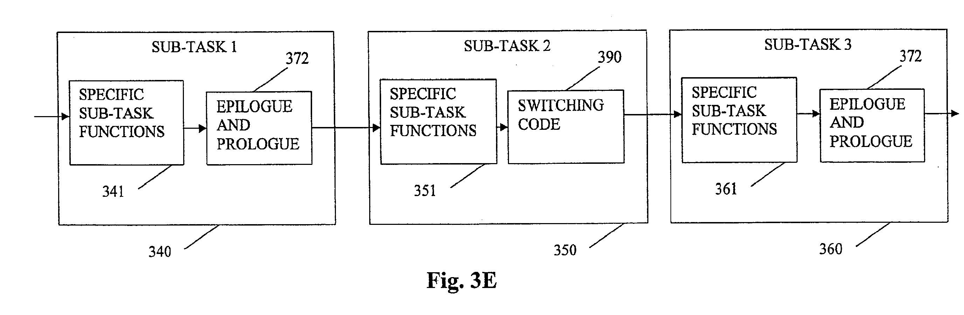

According to embodiments of the invention and, in cases where the same epilogue and prologue may not suit all sub-tasks a small, possibly predefined switching code may be introduced. A switching code may be an executable code segment or section and may include epilogue and prologue executable code that may be specific to two sub-tasks. A switching code may be stored in memory or attached to the code of the relevant sub-tasks in ways similar to those described herein with reference to prologue and epilogue executable code. Reference is made to Fig. 3E showing an exemplary sub-task execution flow. In the example shown in Fig. 3E sub-task-3 shown by block 360 cannot be implemented such that the epilogue and prologue shown by block 372 is able to properly serve it. In such case, switching code 390 may be executed instead of a standard epilogue and prologue module such as shown by block 372. Switching code 390 may comprise execution of an epilogue for the current sub-task and a prologue for the subsequent or next sub-task. Accordingly, a switching code may be required for any pair of sub-tasks that do not comply with a standard scheme, protocol or interface that enables a standard epilogue/prologue module such as the one shown by block 372 to be used.

According to embodiments of the invention, a number of sub-tasks may contain, for example at compilation time, a standard or same epilogue and/or prologue such as the one shown by block 372. Such sub-tasks may be kept in a library or other form and may be freely called and chained for execution as described herein by a calling function. A calling function may chain any number of sub-tasks compiled with or supporting such standard, similar or identical epilogue and/or prologue scheme at run time or real time. Such chaining or associating of sub-tasks may be made possible by embodiments of the invention since such epilogue and/or prologue may allow such-tasks to transfer control and/or execution from one sub-task to another without any intervention of the calling function or any other entity. Alternatively, sub-tasks not compiled with a standard epilogue prologue module or otherwise not containing such code may still be executed as described herein by providing such code at run time. For example, executable code such as described with reference to block 372 may be loaded to memory and sub-tasks supporting a standard epilogue/prologue scheme as described herein may be provided with reference to such code and execute it when appropriate. Alternatively, executable code of selected sub-tasks may be overwritten, e.g., by a calling function, such that execution is transferred from a sub-task to the epilogue/prologue code when appropriate and further to a subsequent sub-task. Overwriting executable code of sub-tasks may thus cause sub-tasks to execute consecutively and/or successively, namely, without intervention of a calling function or any other entity.

According to embodiments of the invention, a calling function or entity may provide minimal information to a number of sub-tasks in order to cause the number of sub-tasks to execute freely, e.g., without further intervention, management or control. For example, a calling function may provide sub-tasks with pointers, addresses or any applicable parameters or references to sub-task that are to be subsequently executed. For example, a calling function may provide sub-task-1 shown by block 370 in Fig. 3D with a pointer or address to or of sub-task-2's code thus enabling sub-task-1 to perform its relevant functions, an epilogue and prologue as described, for example, as shown in block 372, and then cause execution of sub-task-2 by performing an assembly "branch", "jump" or "return" command to the provided address.

According to embodiments of the invention, causing execution to traverse a number of sub-tasks may be performed by overriding their respective executable code, e.g., assembly code, since overriding of normal calling procedures may be required. For example, a sub-task originally written, e.g., in the "C" programming language and subsequently compiled into assembly code may normally return to its calling function or program. Accordingly, at run time and/or in real time, embodiments of the invention may override such sub-task's run time or executable code, e.g., its assembly code, and cause it to, for example, "jump", "branch" or "return" to a subsequent or other sub-task or otherwise transfer execution and/or control of the relevant controller or processor rather than "return" to its caller or initiator.

Other implementation may provide sub-tasks with a pointer, address or any applicable reference to a memory location where any required information or parameters may be found. For example, addresses, either fixed or relevant, of sub-tasks may be stored in such memory location and may be retrieved for use by sub-tasks, for example, a sub-task may retrieve the address of the subsequent sub-task from such memory location. Additional information in such common or other memory location may be executable code. For example, code executing a specific epilogue, prologue or switching code may be stored in such memory location and may be "jumped" to by a sub-task Accordingly, even in cases where the same epilogue and/or prologue can not be used to enable an independent execution flow of sub-tasks such flow may still be achieved by having sub-tasks retrieve information from a known memory location and using such information to transfer execution and/or control to subsequent sub-tasks, possibly via a section of intermediate executable code, e.g., switching code. In such cases, the switching code may be altered by the calling sub-task. For example, a sub-task may alter a switching code's return point, e.g., causing it to "return" to a subsequent sub-task upon finishing execution. Any applicable modification of run time or executable code of sub-tasks, epilogue, prologue or switching run time or executable code may be performed by a calling function or a sub-task in order to enable an unmanaged, unsupervised execution of a number of independent sub-tasks.

According to embodiments of the invention, any operation described herein that may be performed by a calling function may be performed in real time and/or at run time. Such real time or run time operations or functions may be, for example, selecting, from a library or other pool of sub-tasks a number of sub-tasks to execute, for example, according to circumstances, input parameters available to the calling function, scenario or event. Additionally, determining at run time or in real time an execution sequence of selected sub-tasks may be performed by embodiments of the invention, e.g., calling function 210 in Fig. 2C. For example, a first scenario may cause a calling function to determine an execution sequence of sub-task-1, sub-task-3 and sub-task-2 while another scenario, other circumstances, input parameters provided to a calling function, various conditions or any applicable aspects may cause a calling function to determine an execution sequence of sub-task-4, sub-task-1, sub-task-2 and sub-task-3.

Other operations that may be performed in real time and/or at run time may be the initializing of memory locations that may be required for an independent execution of the selected sub-tasks, providing sub-tasks with pointers or other information, overriding of executable code sections of sub-tasks, e.g., in order to control a flow or sequence execution of a number of sub-tasks etc. According to other embodiments of the invention, some of the tasks described above may be performed prior to execution phase. For example, the epilogue and prologue code may be complied into the sub-tasks code thus providing a calling function or entity with a pool of compatible sub-tasks, namely, a pool of sub-tasks that may be executed in any order, one after the other with minimal intervention of the calling or other entity.

According to embodiments of the invention, a complex task, program or function may be broken into a number of sub-tasks. Accordingly, in order to perform a functionality that may be performed by the complex task, a number of sub-tasks capable of performing the functionality of the complex task may be selected and executed. An execution order of the selected sub-task may be determined in advance, for example, at run time or in real time by a calling function. As described herein, a calling function may only call a first sub-task, e.g., cause the first sub-task to execute, other sub-tasks selected as described herein may be called by previously executed sub-tasks.

For example, the calling function or entity may provide pointers, manipulate executable code of the sub-tasks or use any other methods, techniques or means as known in the art for causing an execution flow to traverse a number of tasks or sub-tasks or follow a predetermined order of execution without requiring an intervention of the calling function, the program or application that invokes the process or any other entity. An executable code section comprising a prologue related to the first sub-task and an epilogue related to the second or subsequent sub-task may be executed in order b enable such execution. Such executable code section may be executed by a first sub-task prior to an execution of a subsequent sub-task or it may be executed by a subsequent or second sub-task after a previous or first sub-task has completed execution. Accordingly, a first and second sub-tasks may execute, or be executed by a controller, consecutively.

According to embodiments of the invention, a calling function may cause a plurality of sub-tasks to execute consecutively, successively or otherwise in an uninterrupted manner and without intervention of any controlling or other managing or supervisory entity. For example, a calling function may call or invoke a first sub-task that may, in turn call, invoke or otherwise cause a second sub-task to execute, the second sub-task may similarly cause a third one to run and so on, a last sub-task in such chain, succession or sequence of sub-tasks may return control or execution to the calling function. For example, a calling function may select, at run time, a plurality of sub-tasks to be executed, the calling function may further determine, at run time, the sequence or order according to which the selected sub-tasks are to execute and may manipulate pointers, addresses or any other parameters, e.g., assembly code of the sub-tasks in order to force such execution order. The calling function may then invoke, call or otherwise cause a first sub-task to execute and the selected sub-tasks may then, automatically execute consecutively, in sequence according to the predetermined order as set by the calling function.

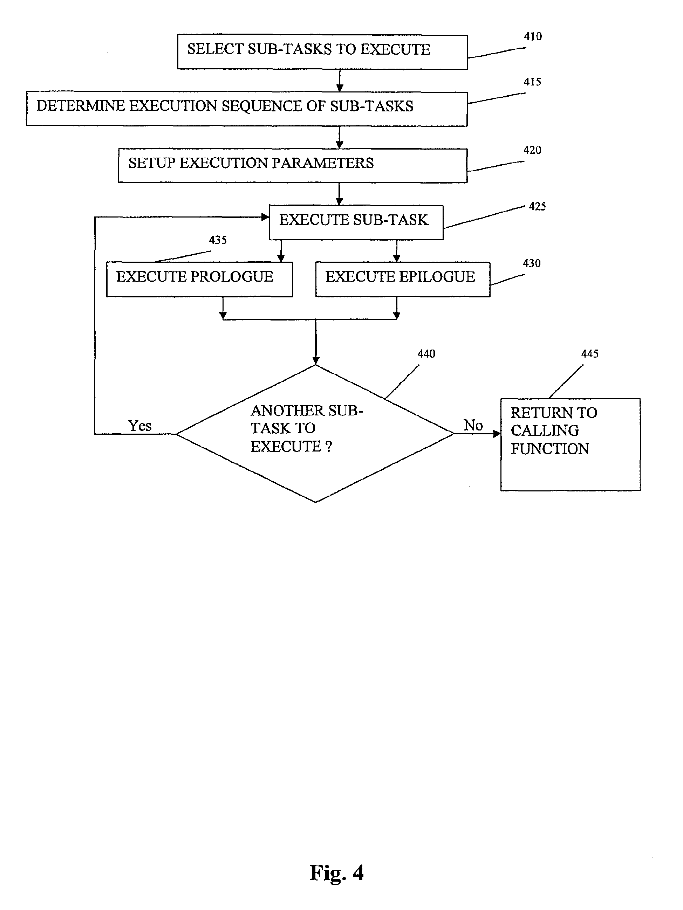

Reference is made to Fig. 4, which shows a flowchart according to embodiments of the invention. As shown by block 410, sub-tasks may be selected to be executed by a controller. For example, calling function 210 shown in Fig. 2C may receive a number of input parameters and based on such input parameters determine a course of action, based on such course of actions, a number of sub-tasks may be selected by calling function 210. For example, a first sub-task may be related to a rendering of information on a display, a second sub-task may be related to alerting a user while a third sub-task may be related to storing of information. Other examples of sub-tasks may be sub-tasks that perform specific processing tasks or functions, such as, finding all yellow pixels in a picture, removing noise, or changing brightness of a digital image. Accordingly, input parameters provided to calling function 210 may dictate that rendering of information on a display is required as is storing of information but alerting a user is not required. Accordingly, the first and third exemplary sub-tasks above may be selected by calling function 210 for execution. Embodiments of the invention are not limited by the granularity of sub-tasks selectable and executed as described herein. According to embodiments of the invention, any process, flow, operation or task may be divided to sub-tasks. For example, a simple operation such as handling input from an input device may be divided to sub-tasks while a complex operation or process such as verifying a user may also be divided into sub-tasks. According to embodiments of the invention, division of tasks may be recursive, namely, a sub-task may itself be divided to sub-task.

Any data, parameters, context information or any other applicable information available to or obtainable by a calling function may be used in the process of selecting the set of sub-tasks to be executed as shown by block 410, such information may include, for example, a state or status of a system, a context, circumstances or any applicable parameters or aspects. Sub-tasks may be selected from a pool of sub-tasks, for example, the set of sub-tasks 120, 121 and 122 loaded into memory 104 of computing device 100 shown in Fig. 1 or sub-tasks 141 stored in storage device 140 connected to device 100 or even a pool of sub-tasks that may be downloaded over a network when needed. As shown by block 415, an execution sequence, order or flow may be determined, according to which selected sub-tasks will be executed. For example, calling function 210 in Fig. 2C may determine the execution sequence or order by which selected sub-tasks will be executed. Execution sequence or order may be determined according to any data, parameters, need, context or information available to or obtainable by a calling function. An execution order of a number of sub-tasks may be such that two or more sets of selected sub-tasks are executed simultaneously at the same time or in parallel. For example, a calling function in application 130 may determine that both a sequence of: sub-task-C then sub-task-A then sub-task-B and a sequence of: sub-task-A then sub-task-B will execute simultaneously or in parallel.

According to embodiments of the invention and as shown by block 420, execution parameters may be setup. For example, code or instructions of sub-tasks may be overwritten as described herein in order to cause them to maintain or adhere to a predetermined flow or order of execution Additionally, pointers may be initialized and/or provided to sub-tasks, memory locations may be initialized with required information, e.g., a common memory location accessible to all sub-tasks may be setup to contain information such as sub-tasks addresses, epilogue/prologue executable code location etc.

As shown by block 425, a sub-task may be executed by a controller as described herein. As shown by blocks 430 and 435, an epilogue and a prologue may be executed as described herein. As shown and described herein, execution of an epilogue and a prologue may be substantially or exactly at the same time. As shown by block 440, it may be determined if more sub-tasks are to be executed. According to embodiments of the invention, determining if more sub-tasks are to be executed as shown by block 440 may be performed by simply transferring execution to a location specified in the code of the executing sub-task, e.g., if the specified location is an entry point of a sub-tasks then another sub-task is to be executed, otherwise, the specified location may typically be an address in the calling function's executable code. If it is determined that another sub-task is to execute then the arrow connecting blocks 440 and 425 is followed and the loop repeats itself, otherwise execution may return to the calling function as shown by block 445.

Embodiments of the invention may include an article such as a computer or processor readable medium, or a computer or processor storage medium, such as for example a memory, a disk drive, or a USB flash memory, encoding, including or storing instructions, e.g., computer-executable instructions, which when executed by a processor or controller, carry out methods disclosed herein. While certain features of the invention have been illustrated and described herein, many modifications, substitutions, changes, and equivalents may occur to those skilled in the art. It is, therefore, to be understood that the appended claims are intended to cover all such modifications and changes as fall within the true spirit of the invention.

Embodiments of the invention may include an article such as a computer or processor readable medium, or a computer or processor storage medium, such as for example a memory, a disk drive, or a USB flash memory, encoding, including or storing instructions, e.g., comp uter-executable instructions, which when executed by a processor or controller, carry out methods disclosed herein.

## Claims

1. A method for executing sub-tasks by a computing device, the method comprising:
selecting at run time, by a calling function, sub-tasks to be executed by a controller;
determining at run time, by the calling function, an execution sequence for the sub-tasks; and
executing the sub-tasks according to the execution sequence including executing an epilogue and prologue in between consecutive sub-tasks to enable sequential execution of the sub-tasks.

2. The method of claim 1, wherein the epilogue and prologue are executed by a first sub-task and the calling function is not involved in executing a second consecutive sub-task.

3. The method of claim 1, wherein the epilogue and the prologue are executed simultaneously.

4. The method of claim 1, wherein before executing the sub-tasks, the calling function overwrites at least part of an executable code section related to at least one of the sub-tasks.

5. The method of claim 4, wherein overwriting the executable code section causes a first and a second sub-tasks to be executed consecutively.

6. The method of claim 1, wherein executing the sub-tasks comprises associating a switching code with two consecutive sub-tasks, wherein the switching code is capable of performing an epilogue related to a first one of said consecutive sub-tasks and a prologue related to a subsequent one of the consecutive sub-tasks.

7. The method of claim 6, wherein associating the switching code is performed at run time.

8. A system comprising:
a memory to store an executable epilogue, an executable prologue, an executable calling function, and a plurality of executable sub-task; and
a controller capable of executing the calling function, the epilogue and prologue and the sub-tasks, wherein the executing comprises:
selecting at run time, by the calling function, sub-tasks to be executed by the controller;
determining at run time, by the calling function, an execution sequence of the selected sub-tasks; and
executing the sub-tasks according to the execution sequence including executing an epilogue and prologue in between consecutive sub-tasks to enable sequential execution of the sub-tasks.

9. The systemof claim 8, wherein the epilogue and the epilogue are executed by a sub-task.

10. The system of claim 8, wherein the epilogue and the prologue are executed simultaneously.

11. The system of claim 8, wherein before executing the sub-tasks, the calling function overwrites at least part of an executable code section related to at least one of the sub-tasks.

12. The system of claim 11, wherein overwriting the executable code section causes the first sub-task and second sub-task to be consecutively executed.

13. The system of claim 8, wherein executing the sub-tasks comprises associating a switching code with two consecutive sub-tasks, wherein the switching code is capable of performing an epilogue related to a first one of said consecutive sub-tasks and a prologue related to a subsequent one of the consecutive sub-tasks;

14. The system of claim 13, wherein associating the switching code with the sub-tasks is performed at run time.

15. An article comprising a computer-readable storage medium, having stored thereon instructions, that when executed on a computer, cause the computer to:
select at run time, by a calling function, sub-tasks to be executed by a controller;
determine at run time, by the calling function, an execution sequence for the sub-tasks; and
executing the sub-tasks according to the execution sequence including executing an epilogue and prologue in between consecutive sub-tasks to enable sequential execution of the sub-tasks.
